# EUROPEAN PATENT SPECIFICATION

(11) **EP 2 961 587 B1**
(45) Date of publication and mention of the grant of the patent: **08.05.2019**
(21) Application number: 14716922.1
(22) Date of filing: 26.02.2014
(51) Int. Cl.: B29C 49/64, B29C 49/68, B29C 49/06, B29K 67/00, B29L 31/00, F27D 7/02, F27D 7/04, H05B 3/00

(54) **HEATING PLANT FOR CONTAINER PREFORMS**
ERWÄRMUNGSANLAGE FÜR BEHÄLTERVORFORMLINGE
INSTALLATION DE CHAUFFAGE POUR PRÉFORMES DE CONTENEURS

(30) Priority: 28.02.2013 IT RM20130121
(43) Date of publication of application: 06.01.2016
(73) Proprietor: S.I.P.A. Società Industrializzazione Progettazione e Automazione S.p.A., 31029 Vittorio Veneto (IT)
(72) Inventor: EUSEBIONE, Ernesto, I-31010 Mareno Di Piave (IT); CHIAROTTO, Giovanni, I-33084 Cordenons (IT); ZOPPAS, Matteo, I-31015 Conegliano (IT)
(74) Representative: Cinquantini, Bruno
(86) International application number: PCT/IB2014/059262
(87) International publication number: WO 2014/132199

(56) References cited:
- EP-A1- 0 564 354
- EP-A1- 2 094 312
- EP-A1- 2 392 442
- US-A- 5 718 853

## Description

### Field of the invention

The present invention relates to a heating plant for container preforms, in particular used before the blow moulding step of plastic material containers.

### State of the art

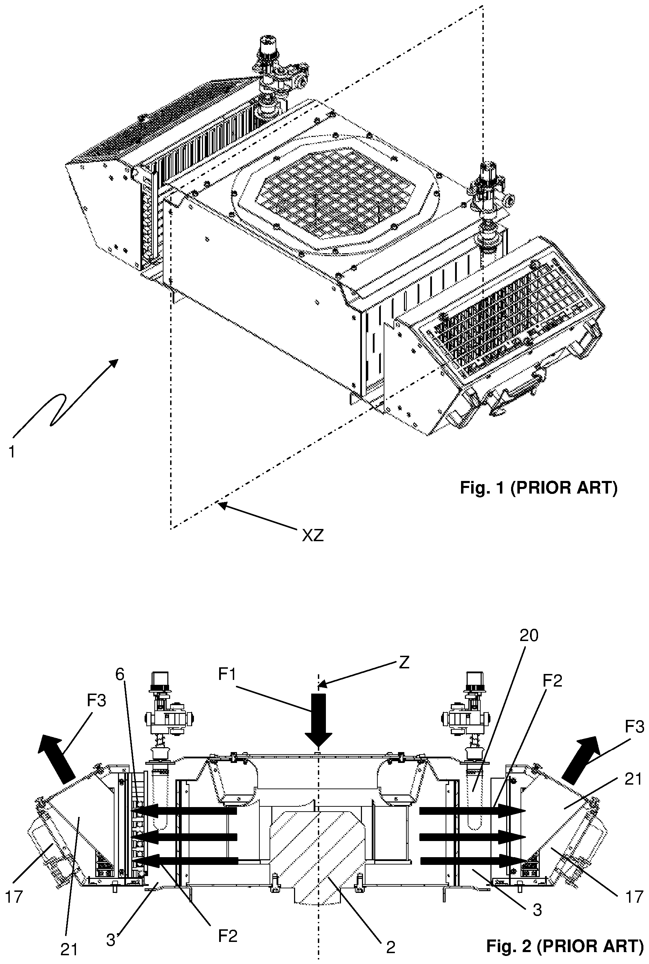

Blowing machines including heating plants (figure 1 and figure 2) for plastic material container preforms are already known. Generally, the preforms are heated before the blow moulding or stretch-blowing step so as to bring the preform material to an appropriate temperature in order to obtain a quality moulded container.

The thermal energy source for heating the preforms generally consists of infrared radiation lamps (IR). The preforms, moved by a transfer chain, cross a tunnel furnace 1 along which a plurality of IR lamps is arranged. A fan 2 is typically provided, which sucks an inlet air flow F1 from the ambient and generates, at the delivery, a ventilating flow F2 oriented against the preforms which cross the tunnel furnace 1. Thereby, the outer surface of the preforms is cooled, thus preventing that outer surface from crystallizing while the IR thermal radiation penetrates through the thickness of the preforms.

The final object of the heating step is to obtain a temperature profile through the wall of the preforms which is as uniform as possible so as to optimize the successive blowing or stretch-blowing step while ensuring the required quality of the containers produced and thus limiting rejects. After having crossed the preform tunnel, the air is expelled outside furnace 1 at an outlet temperature which normally exceeds the ambient temperature by 30-40° C.

Tunnel furnaces provided with the above-mentioned ventilating system are described in greater detail in EP 1240807 and in WO2012172529.

The temperature of the ventilating air flow F2 varies as a function of the temperature of the ambient and of the radiant power generated by the IR lamps, which is a function of the status of the blower. Indeed, being in the immediate vicinity of the IR lamps, the ventilating system also suffers from the variations in the local temperature subsequent to the operating status of the blower, in addition to suffering from the variations in the ambient temperature. For example, the power and therefore the temperature generated by the IR lamps reach the maximum values during the container blowing steps, while the power values are lower than the maximum values during the waiting steps, in which the furnace is not crossed by preforms.

The temperature of the preforms exiting from furnace 1, on which the performance of the successive moulding or blowing or stretch-blowing step depends in terms of quality of the container produced and number of rejects, is caused by:
- radiant power developed by the IR lamps;
- temperature of the ventilating air flow.

Concerning the radiant power developed by the IR lamps, typically furnace 1 is provided with a feedback control plant which, based on the measurement of the temperature of the preform in a predefined area, modulates the power of the IR lamps while attempting to keep the temperature measured constant and close to a predefined value.

The ventilating system is instead incapable of controlling the temperature of the ventilating air, since as mentioned, it suffers both from the variations in the ambient temperature and the status of the blower. In certain types of production, this does not compromise the performance of the blowing step. For example, when producing PET containers, it is normal to accept ± 3°C variations in the preform temperature with respect to the preform temperature of 105-110°C, since the melting temperature of the PET is equal to 250°C.

However in other cases, ± 3°C variations in the preform temperature are not acceptable. For example, this occurs when polypropylene (PP) containers are blown, for which the preforms are heated at temperatures of 135-145°C, therefore very close to the melting temperature of the PP which is equal to 165°C.

In these cases, there is a need for the temperature of the ventilating air to oscillate within a very small range, for example ± 1 °C.

A solution to this problem is described in EP 0564354 A1, in which a plant is described for recirculating the air flow F3 exiting from the furnace which allows adjustable quantities of air from the ambient to be mixed with the hot air exiting from the furnace so as to keep constant the temperature of the ventilating plant air. Such a solution has a plurality of drawbacks, the main ones being caused by the fact that the maximum temperature reachable by the air flow F3 exiting from the furnace is in any event limited (30-40°C higher than the ambient temperature), thus consequently also limiting the maximum temperature reachable by the ventilating air. This may involve problems both when the furnace is crossed by the preforms and in the waiting steps, should an elevated temperature want to be kept without employing the IR lamps.

A further drawback is caused by the mixing member described in EP 0564354 A1. It is indeed provided in such a document that the air from the ambient and the hot air exiting from the furnace are mixed with each other upstream of the preform tunnel by means of a rotary fin interposed between the ambient air inlet and the recirculation conduit. Such modality of choking the flow may involve an undesired level of turbulence in the mixed air flow downstream of the fin.

EP 2 392 442 A1 and US 5 718 853 A also describe apparatuses for conditioning preforms.

Thus the need is felt to make a preform heating plant which allows overcoming the aforesaid drawbacks.

### Summary of the invention

It is the primary object of the present invention to make a preform heating plant characterized by a high temperature of the ventilating air, higher even than the temperature normally obtainable by mixing ambient air and ventilating air downstream of the preform tunnel, and constant, or in any case oscillating within a small range of values.

Such an object is achieved by means of a plastic material preform heating plant comprising:
- at least one tunnel for the passage of a plurality of preforms to be heated;
- a plurality of infrared radiation lamps arranged along said at least one tunnel for heating said plurality of preforms;
- forced ventilation means for generating a ventilating air flow, said forced ventilation means being shaped and arranged so as to convey said ventilating air flow through said at least one tunnel,
- at least one recirculation channel arranged to receive said ventilating air flow exiting from said at least one tunnel,
- a mixing member, including at least one first inlet for ambient air, at least one second inlet communicating with said recirculation channel for receiving said ventilating air flow exiting from said at least one tunnel and at least one mixed air flow outlet, said mixing member being shaped and arranged so as to convey said mixed air flow towards a suction side of said forced ventilation means,
- at least one mobile shutter for regulating the opening of said at least one first inlet or of said at least one second inlet; characterized in that said heating plant further comprises:
- a hot air source,
- flow means for conveying a flow of said hot air from said source towards said mixing member.

The use of a further hot air source allows:
- temperature values of the ventilating air to be reached which are higher than those obtainable from the complete recovery of the hot air exiting from the furnaces. Such a feature lends itself particularly, but not exclusively, in the case of polypropylene preform blowing, in which a sufficiently high temperature of the ventilating air allows the blowing process to be more independent from the variations in the ambient temperature;
- high temperatures to be maintained of the ventilating air in the furnace, also in the waiting steps, in which there are still no preforms to be heated and accordingly, in which the power of the IR lamps is at the minimum operating values, thus minimizing the temperature variations in the ventilating air during the transient steps of the blowing machine (passage from waiting to container blowing).

The dependent claims describe preferred embodiments of the invention.

### Brief description of the figures

Further features and advantages of the invention will be more apparent in light of the detailed description of a preferred, but not exclusive, embodiment of a preform heating plant, shown by way of non-limiting example, with the aid of the accompanying drawings in which:
figure 1 depicts an axonometric view of a heating plant according to the known art;
figure 2 depicts a cross section of the plant in figure 1;
figure 3 depicts an axonometric view of a heating plant according to the present invention;
figure 4 depicts a top view of the plant in figure 1;
figure 5 depicts a cross section of the plant in figure 1, taken along the sectional line V-V in figure 4;
figure 6 depicts an axonometric view deriving from the one in figure 3, to show a plurality of internal components of the heating plant according to the present invention in a first operating configuration thereof;
figure 7 depicts an enlarged view of detail VII in figure 6;
figure 8 depicts the axonometric view in figure 6, in a second operating configuration of the heating plant according to the present invention;
figure 9 depicts an enlarged view of detail IX in figure 8;
figure 10 depicts the axonometric view in figure 6, in a third operating configuration of the heating plant according to the present invention;
figure 11 depicts an enlarged view of detail XI in figure 10;
figure 12 depicts a cross section of the plant in figure 3, taken along the plane of symmetry XZ.

The same numbers and the same reference letters in the figures identify the same elements or components.

### Detailed description of a preferred embodiment of the invention

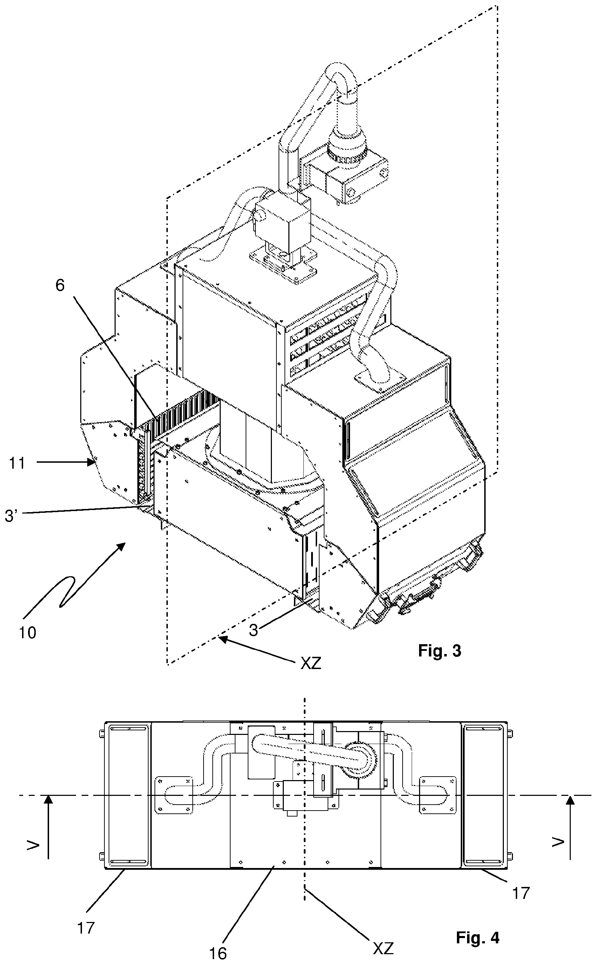

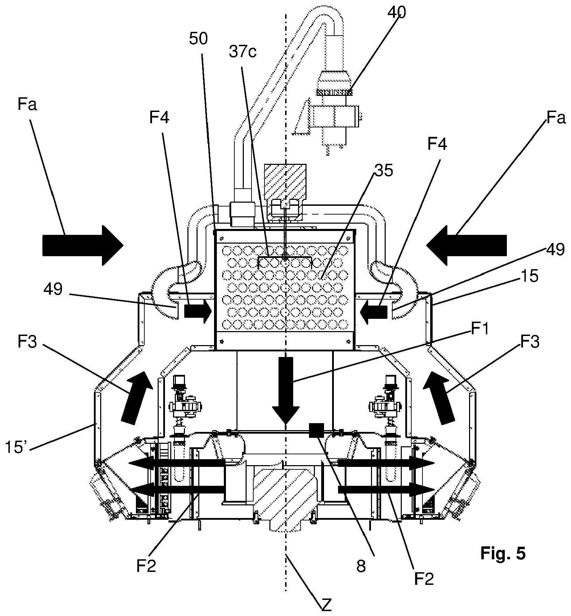

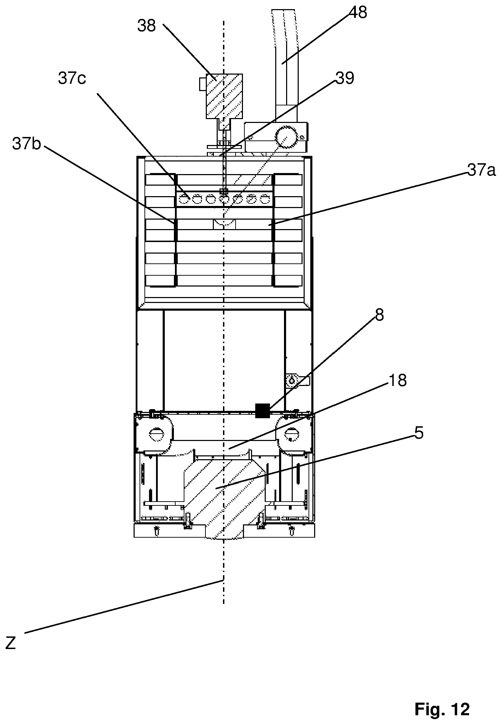

With reference to figures 3-12, an embodiment is depicted of a heating plant for container preforms, globally indicated by numeral 10. The preforms to be heated are generally made of plastic material, for example PET, PP, PLA, PVC but the plant of the invention may also be used to heat moulded preforms or containers made of different plastic material, or of a combination of some of these materials. With reference to figures 1 and 2, the heating plant 10 of the present invention is partly identical to the heating plant 1 known, already mentioned above. For this reason, the same numerals used in the description of the known plant in figures 1 and 2 will also be used in the description of the heating plant 10.

In the embodiment in figures 3-12, plant 10 is substantially symmetrical with respect to a longitudinal plane XZ, parallel to a longitudinal direction X of movement of the preforms and from a direction Z orthogonal to the longitudinal direction X and normally oriented according to a vertical axis.

Embodiments not depicted are possible, without departing from the invention, in which the heating plant comprises a plurality of modules which are identical to plant 10 described below and arranged in succession, side-by-side along the longitudinal direction X.

The plant 10 comprises a heating body 11 susceptible to receiving a plurality of preforms 20 to be heated at a predetermined and uniform temperature through the thickness of the preforms 20.

The heating body 11 comprises a middle portion 16 and two side portions 17. The side portions 17 are symmetrical with respect to the plane of symmetry XZ and comprise two tunnels 3, 3', respectively, which are parallel to each other for the passage of the preforms 20 to be heated. The tunnels 3, 3' define the longitudinal direction X and are symmetrically arranged with respect to the plane of symmetry XZ. The preforms 20 are transported along the tunnels 3, 3' by a transfer chain provided with plates (not shown). The preforms 20 enter the heating body 11 by travelling along one of the two tunnels 3, 3', at the end of which is provided a curved section (not depicted), connecting two respective ends of said tunnels 3, 3' positioned at one same longitudinal end of the heating body 11. The preforms pass to the other of the two tunnels 3, 3' at the end of the curved connecting section. The two tunnels 3, 3' are therefore crossed in series by the preforms 20, according to respective parallel and discordant crossing directions.

A respective plurality of infrared radiation lamps 6 for heating the preforms crossing the respective tunnel 3, 3' is arranged along each tunnel 3, 3'. The conformation of the tunnels 3, 3', the lamps 6 and the arrangement thereof inside the tunnels 3, 3' is known per se and conventional and therefore is not described in greater detail.

The middle portion 16 is placed substantially in the middle of the heating body 11, between the side portions 17, and comprises an inner cavity 18 inside of which forced ventilation means are accommodated, consisting of a fan 2, which is provided with an impeller 5 having parallel axis with respect to the axis of symmetry Z. The fan 2 sucks a flow rate of inlet air F1 to generate a ventilating air flow F2, at the delivery. The flow rate of inlet air F1 is almost according to the axis of symmetry Z. Fan 2 is shaped and arranged in the middle portion 16 so as to direct the ventilating air flow F2 exiting from impeller 5 towards each of the tunnels 3, 3'. The ventilating air flow F2 crosses the tunnels 3, 3' according to respective directions transversal to the longitudinal direction X.

The action of the lamps 6 allows the preforms 20 crossing each of the tunnels 3, 3' to be heated. The action of the ventilating air flow F2 allows the surface of the preforms to be cooled by forced ventilation, thus preventing said surface from crystallizing. Thereby, when crossing the tunnels 3, 3', the preforms 20 are also heated in the most inner parts thereof without damaging the most outer parts. The combined action of the lamps 6 and of the ventilating air flow F2 allows preforms 20 to be obtained at a temperature which is as uniform as possible through the thickness, at the outlet of the heating plant 10, after the tunnels 3, 3' have been crossed in series. The preforms enter a moulding press at the outlet of the heating plant 10 for the successive blowing or stretch-blowing step of the containers. The moulding press is not depicted nor described because it is not an object of the present invention.

After having crossed the tunnels 3, 3' and having received heat from contact with the preforms 20 and the thermal radiation generated by the lamps 6, the ventilating air flow F2 exits from the heating body 11 at two respective and opposing symmetrical outlet channels 21, with respect to the plane of symmetry XZ. Each outlet channel 21 is tilted with respect to the plane of symmetry XZ and faces so as to be crossed by the ventilating air according to a direction having a parallel and discordant component with respect to the air flow F1 inlet into the heating body 11.

The plant 10 comprises a pair of symmetrical recirculation channels 15, 15' with respect to the plane of symmetry XZ and arranged so as to receive two recirculating air flows F3, respectively, consisting of the heated ventilating air exiting from the tunnels 3, 3' and of the channels 21 of the heating body 11.

Each recirculation channel 15, 15' directs the recirculating air flow F3 towards a mixing member 30, which serves the purpose of mixing the recirculating air F3 with the ambient air to create a mixed air flow F1 to be directed towards the suction of the fan 2.

The mixing member 30 is placed at the plane of symmetry XZ and comprises an outer hollow parallelepiped-shaped casing 50. The outer casing 50 comprises five flat faces 30a, 30b, 30c, 30d, 51 made of sheet metal, which form, respectively:
- two opposing side faces 30a, 30b identical to each other, parallel to the plane of symmetry XZ and symmetrically arranged with respect thereto;
- two opposing front faces 30c, 30d orthogonal to the plane of symmetry XZ;
- one base 51, orthogonal to the axis of symmetry Z and to the faces 30a, 30b, 30c, 30d.

The side of casing 50 opposing base 51 is open and faces towards the heating body 11 so as to direct the mixed air flow F1 exiting from the mixing member 30 towards the suction of fan 2, through a connecting conduit 52 extending from the mixing member 30 to the heating body 11.

Each of the two side faces 30a, 30b comprises a first plurality of inlets 31, in the shape of slits parallel to the longitudinal axis X, for the inlet of ambient air Fa. Three slits 31 are provided in the example in the accompanying drawings.

Each of the two side faces 30a, 30b comprises a second plurality of inlets 32, in the shape of slits parallel to the longitudinal axis X, respectively communicating with one of the recirculation channels 15, 15', for receiving the recirculating air flow F3. Three slits 32 are provided in the example in the accompanying drawings. The mixing member 30 is provided with a mobile shutter 35, of the type with a sliding gate, for regulating the opening of the two pluralities of inlets 31, 32. Shutter 35 is shaped so as to regulate the opening of the two pluralities of inlets 31, 32 by sliding inside casing 50.

Shutter 35 comprises two metal shutter plates 36, which slide inside casing 50 and respectively adjacent to the side faces 30a, 30b. The two metal plates 36 are provided with respective slits 56 with dimensions identical to those of the plurality of inlets 31, 32. The slits 56 are arranged and separated from each other so that it is possible, by sliding the metal plates along the side faces 30a, 30b, to close, open or choke the inlets 31, 32 according to the specific temperature needs of the mixed air flow F1.

With reference to the accompanying drawings 6-11, in which the recirculation channel 15 is shown without the outer cover, the following operating modalities are illustrated:

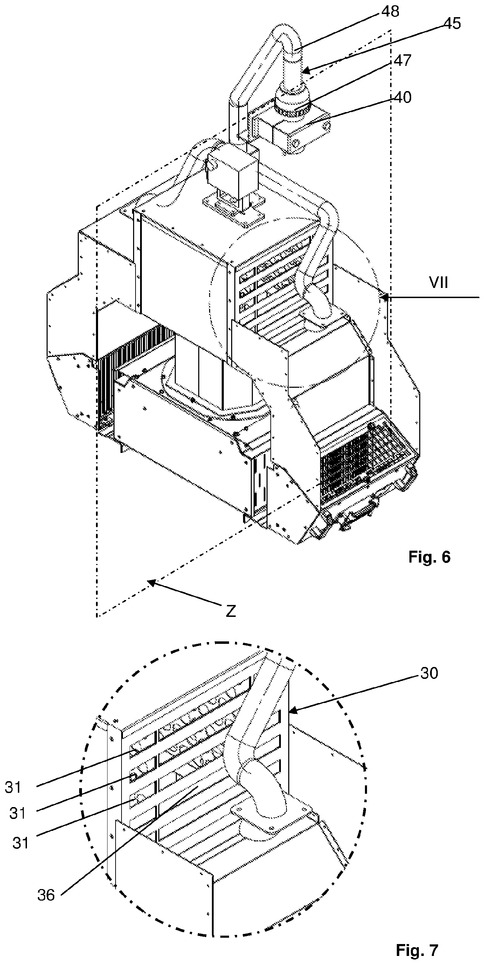

- figures 6 and 7: the first plurality of inlets 31 is open and the second plurality of inlets is closed. This means that the mixed air flow F1 exiting from mixer 30 consists only of ambient air;

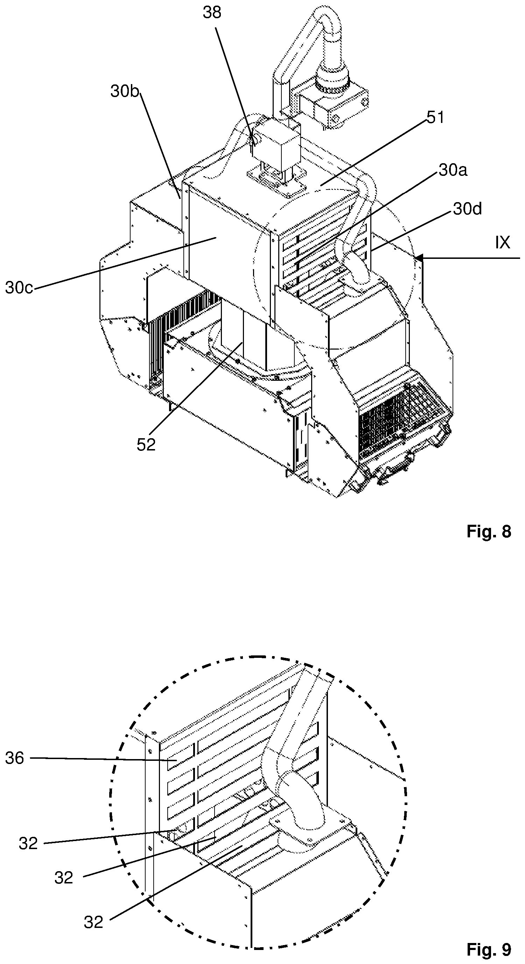

- figures 8 and 9: the first plurality of inlets 31 is closed and the second plurality of inlets is open. This means that the mixed air flow F1 exiting from mixer 30 consists only of recirculating air;

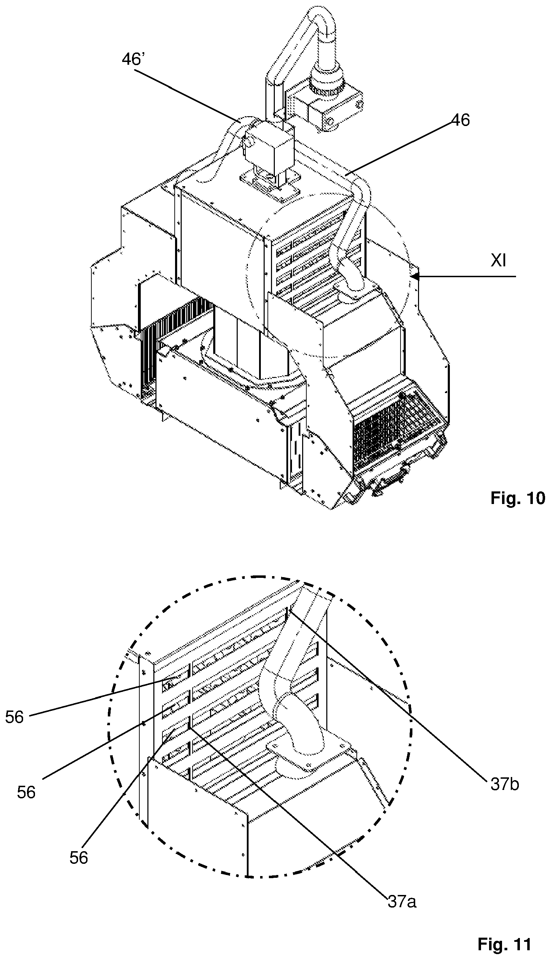

- figures 10 and 11: both the first plurality of inlets 31 and the second plurality of inlets are partly open. This means that the mixed air flow F1 exiting from mixer 30 consists of a mixture of ambient air and recirculating air.

Shutter 35 further comprises a first and a second holed metal plate 37a, 37b for connecting between the metal shutter plates 36 and orthogonal thereto and to the plane of symmetry XZ. The first and the second holed plates 37a, 37b are arranged inside casing 50 so that the distance between the first holed metal plate 37a and the front face 30c is equal to the distance between the second holed metal plate 37b and the other front face 30d of casing 50. The holed metal plates 37a, 37b are connected to each other by means of a third holed plate 37c orthogonal to the axis of symmetry Z. The holes in the metal connecting plates 37a, 37b, 37c allow the air flows inside the mixer not be to significantly obstructed. The third plate 37c is connected to rod 39 of an actuator 38 placed outside casing 50, on base 51. The movement of rod 39 allows the assembly of shutter 35, consisting of the metal shutter plates 36 and the holed metal plates 37a, 37b, 37c, to be slidingly moved.

Actuator 38 is feedback controlled on the basis of a temperature reading provided by a temperature sensor 8 placed in the connecting conduit 52 immediately upstream of fan 2. Such a control modality provides, for example, that in the event a high temperature is required in the mixed air flow F1, and the temperature measured by sensor 8 is less than such a required temperature, then actuator 38 brings shutter 35 progressively towards the position in figure 9.

In certain operating configurations, the temperature of the mixed air flow F1 is nevertheless required to be higher than the one of the recirculating air flow F3. To obtain this, the plant 10 further comprises a hot air source 40 and flow means 45 for conveying a further flow F4 of hot air from the source 40 towards the mixing member 30. The hot air source 40 is obtained by heating the ambient air by means of suitable variable temperature heating means, for example consisting of an electric resistor. The flow means 45 comprise a fan 47 for sending the hot air from source 40 to the mixing member 30 and a connecting conduit 48 between source 40 and the mixing member 30. The conduit 48 comprises a single initial section from which two final sections 46, 46' branch off to connect the hot air source 40 to each of the recirculation channels 15, 15', respectively. Each of said two final sections 46, 46' ends with a respective end section 49 accommodated in one of the recirculation channels 15, 15' respectively, facing towards the second plurality of inlets 32, so as to mix with the recirculating air flow F3 inlet into mixer 30.

The temperature and the flow rate of the hot air flow F4 from source 40 are controlled by regulating the power of the electric resistor and of fan 47. Different types of control are possible, according to respective embodiments of the present invention:
- open control: the temperature and flow rate of flow F4 are set by the operator or by the general controller of the plant 10 according to preset parameters as a function of the blower status, for example blower in the step of blowing containers or blower in the waiting step;
- closed control: as for actuator 38, the temperature and the flow rate of flow F4 are regulated automatically on the basis of the reading of the temperature sensor 8.

The presence of source 40 and of the hot air flow 40 allows requests to be managed of air inlet into the fan 2 with high temperature, also higher than the temperature of the air exiting from the heating body 11.

The present invention therefore allows the object proposed to be reached, with reference to the mentioned known art.

Moreover, the present invention allows further advantages to be achieved. In particular, the embodiment described with reference to the accompanying figures describes a mixing member 30 with translating shutter and plurality of opposing inlets. Thereby, the forces generated by the air flows inlet into the mixing member are conveniently balanced and the turbulences determined by the interference between the inlet air flows and shutter member are limited.

## Claims

1. A heating plant (10) for plastic material preforms (20), comprising:
- at least one tunnel (3, 3') for the passage of a plurality of preforms (20) to be heated;
- a plurality of infrared radiation lamps (6) arranged along said at least one tunnel (3, 3') for heating said plurality of preforms (20);
- forced ventilation means (2) for generating a ventilating air flow (F2, F3), said forced ventilation means (2) being shaped and arranged so as to convey said ventilating air flow (F2) through said at least one tunnel (3, 3');
- at least one recirculation channel (15, 15') arranged to receive said ventilating air flow (F2, F3) exiting from said at least one tunnel (3, 3');
- a mixing member (30), including at least one first inlet (31) for ambient air, at least one second inlet (32) communicating with said recirculation channel (15, 15') for receiving said ventilating air flow (F2, F3) exiting from said at least one tunnel (3, 3') and at least one mixed air flow outlet (F1), said mixing member (30) being shaped and arranged so as to convey said mixed air flow (F1) towards a suction side of said forced ventilation means (2);
- at least one mobile shutter (35) for regulating the opening of said at least one first inlet (31) or of said at least one second inlet (32);
**characterized in that** said heating plant (10) further comprises:
- a hot air source (40);
- flow means (45) for conveying a flow (F4) of said hot air from said source (40) towards said mixing member (30).

2. A plant (10) according to claim 1, wherein said shutter (35) is slidingly moveable.

3. A plant (10) according to claim 1 or 2, wherein said shutter (35) is shaped so as to regulate the opening of said at least one first inlet (31) and said at least one second inlet (32) at the same time.

4. A plant (10) according to one of the preceding claims, wherein the flow means (45) comprise at least one conduit (46, 46') for connecting said source (40) to said recirculation channel (15, 15').

5. A plant (10) according to claim 4, wherein said conduit (46, 46') extends between said source (40) and a final section (49) accommodated in said recirculation channel (15, 15') and facing at least said second inlet (32).

6. A plant (10) according to one of the preceding claims, wherein the plant is provided with:
- two tunnels (3, 3') for the passage of said preforms symmetrically arranged with respect to a longitudinal symmetry plane (XZ);
- two recirculation channels (15, 15') arranged symmetrically with respect to said symmetry plane (XZ) to receive respective ventilating air flows (F2, F3) exiting from said tunnels (3, 3');
- two conduits (46, 46') to connect said source (40) to said recirculation channels (15, 15'), respectively;
and wherein said forced ventilation means (2) and said mixing member (30) are arranged at said longitudinal symmetry plane (XZ), said mixing member (30) being provided with two side surfaces (30a, 30b) arranged symmetrically with respect to said symmetry plane (XZ), each of said side surfaces (30a, 30b) being provided with at least one first inlet (31) for ambient air and at least one second inlet (32) communicating with one of said recirculation channels (15, 15').

7. A plant (10) according to one of the preceding claims, wherein said plant (10) comprises an actuator (38) for moving said shutter (35) and a temperature sensor (8) for measuring the temperature of said mixed air flow (F1), said actuator (38) being connected to said temperature sensor (8) for regulating the opening of said at least one first inlet (31) or of said at least one second inlet (32) as a function of the temperature of said mixed air flow (F1).

8. A plant (10) according to one of the preceding claims, wherein said hot air source (40) comprises heating means for varying the temperature of said source (40).

9. A plant (10) according to claim 8, wherein said heating means are connected to a temperature sensor (8) arranged at said mixed air flow (F1), so as to vary the temperature of said source (40) as a function of the temperature of said mixed air flow (F1).

## Patentansprüche

1. Erwärmungsanlage (10) für Vorformen (20) aus Kunststoff, aufweisend:
- zumindest einen Tunnel (3, 3') für den Durchlass einer Vielzahl von zu erwärmenden Vorformen (20);
- eine Vielzahl von Lampen mit Infrarotstrahlung (6), angeordnet längs dem zumindest einen Tunnel (3, 3'), zum Erwärmen der Vielzahl von Vorformen (20);
- Mittel zur Zwangsbelüftung (2), um einen ventilierenden Luftstrom (F2, F3) zu erzeugen, wobei die Mittel zur Zwangsbelüftung (2) derart geformt und angeordnet sind, dass sie den ventilierenden Luftstrom (F2) durch den zumindest einen Tunnel (3, 3') befördern;
- zumindest einen Rückströmkanal (15, 15'), der derart angeordnet ist, dass er den ventilierenden Luftstrom (F2, F3) aufnimmt, der aus dem zumindest einen Tunnel (3, 3') austritt;
- ein Mischerteil (30) mit zumindest einem ersten Einlass (31) für Umgebungsluft, zumindest einem zweiten Einlass (32) in Verbindung mit dem Rückströmkanal (15, 15'), um den ventilierenden Luftstrom (F2, F3) aufzunehmen, der aus dem zumindest einen Tunnel (3, 3') austritt, und zumindest einem Auslass für gemischte Luft (F1), wobei das Mischerteil (30) derart geformt und angeordnet ist, dass es den gemischten Luftstrom (F1) der Ansaugseite der Mittel zur Zwangsbelüftung (2) zuführt;
- zumindest eine bewegliche Klappe (35) zur Regelung der Öffnung des zumindest einen ersten Einlasses (31) oder des zumindest einen zweiten Einlasses (32);
**dadurch gekennzeichnet, dass** die Erwärmungsanlage (10) des Weiteren aufweist:
- eine Heißluftquelle (40);
- Durchflussmittel (45) zum Befördern eines Stroms (F4) der heißen Luft von der Quelle (40) zu dem Mischerteil (30).

2. Anlage (10) gemäß Anspruch 1, wobei die Klappe (35) gleitend verschiebbar ist.

3. Anlage (10) gemäß Anspruch 1 oder 2, wobei die Klappe (35) derart gestaltet ist, dass sie die Öffnung des zumindest einen ersten Einlasses (31) und des zumindest einen zweiten Einlasses (32) gleichzeitig regelt.

4. Anlage (10) gemäß einem der vorigen Ansprüche, wobei die Durchflussmittel (45) zumindest einen Kanal (46, 46') aufweisen, um die Quelle (40) mit dem Rückströmkanal (15, 15') zu verbinden.

5. Anlage (10) gemäß Anspruch 4, wobei sich der Kanal (46, 46') zwischen der Quelle (40) und einem Endabschnitt (49) erstreckt, der in dem Rückströmkanal (15, 15') untergebracht ist und dem zumindest zweiten Einlass (32) zugewandt ist.

6. Anlage (10) gemäß einem der vorigen Ansprüche, wobei die Anlage aufweist:
- zwei Tunnel (3, 3') für den Durchlass der Vorformen, die symmetrisch bezüglich einer Längssymmetrieebene (XZ) angeordnet sind;
- zwei Rückströmkanäle (15, 15'), die symmetrisch bezüglich der Längssymmetrieebene (XZ) angeordnet sind, um die jeweiligen ventilierenden Luftströme (F2, F3) aufzunehmen, die aus den Tunneln (3, 3') austreten;
- zwei Kanäle (46, 46') um die Quelle (40) mit den jeweiligen Rückströmkanälen (15, 15') zu verbinden;
und wobei die Mittel zur Zwangsbelüftung (2) und das Mischerteil (30) an der Längssymmetrieebene (XZ) angeordnet sind, das Mischerteil (30) mit zwei Seitenflächen (30a, 30b) versehen ist, die gegenüber der Symmetrieebene (XZ) symmetrisch angeordnet sind, wobei jede der beiden Seitenflächen (30a, 30b) mit zumindest einem ersten Einlass (31) für Umgebungsluft und mit zumindest einem zweiten Einlass (32), der in Verbindung mit dem Rückströmkanal (15, 15') steht, versehen ist.

7. Anlage (10) gemäß einem der vorigen Ansprüche, wobei die Anlage (10) einen Antrieb (38) zum Bewegen der Klappe (35) und einen Temperatursensor (8) zur Temperaturmessung des gemischten Luftstroms (F1) aufweist, wobei der Antrieb (38) mit dem Temperatursensor (8) verbunden ist, um die Öffnung des zumindest einen ersten Einlasses (31) oder des zumindest einen zweiten Einlasses (32) als eine Funktion der Temperatur des gemischten Luftstroms (F1) zu regeln.

8. Anlage (10) gemäß einem der vorigen Ansprüche, wobei die Heißluftquelle (40) Heizmittel zur Temperaturänderung der Quelle (40) aufweist.

9. Anlage (10) gemäß Anspruch 8, wobei die Heizmittel mit einem Temperatursensor (8) verbunden sind, der bei dem gemischten Luftstrom (F1) angeordnet ist, so dass die Temperatur der Quelle (40) als eine Funktion der Temperatur des gemischten Luftstroms (F1) verändert werden kann.

## Revendications

1. Installation de chauffage (10) pour des préformes en matériau plastique (20), comprenant :
- au moins un tunnel (3, 3') pour le passage d'une pluralité de préformes (20) à chauffer ;
- une pluralité de lampes à rayonnement infrarouge (6) agencées le long dudit au moins un tunnel (3, 3') pour chauffer ladite pluralité de préformes (20) ;
- un moyen de ventilation forcée (2) pour générer un écoulement d'air de ventilation (F2, F3), ledit moyen de ventilation forcée (2) étant formé et agencé de façon à acheminer ledit écoulement d'air de ventilation (F2) à travers ledit au moins un tunnel (3, 3');
- au moins un canal de recirculation (15, 15') agencé pour recevoir ledit écoulement d'air de ventilation (F2, F3) sortant dudit au moins un tunnel (3, 3') ;
- un organe de mélange (30), incluant au moins un premier orifice d'entrée (31) pour l'air ambiant, au moins un second orifice d'entrée (32) communiquant avec ledit canal de recirculation (15, 15') pour recevoir ledit écoulement d'air de ventilation (F2, F3) sortant dudit au moins un tunnel (3, 3') et au moins un orifice de sortie d'écoulement d'air mélangé (F1), ledit organe de mélange (30) étant formé et agencé de façon à acheminer ledit écoulement d'air mélangé (F1) vers un côté aspiration dudit moyen de ventilation forcée (2) ;
- au moins un volet mobile (35) pour réguler l'ouverture dudit au moins un premier orifice d'entrée (31) ou dudit au moins un second orifice d'entrée (32) ;
**caractérisée en ce que** ladite installation de chauffage (10) comprend en outre :
- une source d'air chaud (40) ;
- un moyen d'écoulement (45) pour acheminer un écoulement (F4) dudit air chaud depuis ladite source (40) vers ledit organe de mélange (30).

2. Installation (10) selon la revendication 1, dans laquelle ledit volet (35) est mobile en coulissement.

3. Installation (10) selon la revendication 1 ou 2, dans laquelle ledit volet (35) est formé de façon à réguler l'ouverture dudit au moins un premier orifice d'entrée (31) et dudit au moins un second orifice d'entrée (32) en même temps.

4. Installation (10) selon l'une des revendications précédentes, dans laquelle le moyen d'écoulement (45) comprend au moins un conduit (46, 46') pour raccorder ladite source (40) audit canal de recirculation (15, 15').

5. Installation (10) selon la revendication 4, dans laquelle ledit conduit (46, 46') s'étend entre ladite source (40) et une section finale (49) logée dans ledit canal de recirculation (15, 15') et en regard dudit au moins un second orifice d'entrée (32).

6. Installation (10) selon l'une des revendications précédentes, dans laquelle l'installation est pourvue de :
- deux tunnels (3, 3') pour le passage desdites préformes agencés symétriquement par rapport à un plan de symétrie longitudinal (XZ) ;
- deux canaux de recirculation (15, 15') agencés symétriquement par rapport audit plan de symétrie (XZ) pour recevoir des écoulements d'air de ventilation (F2, F3) respectifs sortant desdits tunnels (3, 3') ;
- deux conduits (46, 46') pour raccorder ladite source (40) auxdits canaux de recirculation (15, 15'), respectivement ;
et dans laquelle ledit moyen de ventilation forcée (2) et ledit organe de mélange (30) sont agencés au niveau dudit plan de symétrie longitudinal (XZ), ledit organe de mélange (30) étant pourvu de deux surfaces latérales (30a, 30b) agencées symétriquement par rapport audit plan de symétrie (XZ), chacune desdites surfaces latérales (30a, 30b) étant pourvue d'au moins un premier orifice d'entrée (31) pour l'air ambiant et d'au moins un second orifice d'entrée (32) communiquant avec l'un desdits canaux de recirculation (15, 15').

7. Installation (10) selon l'une des revendications précédentes, dans laquelle ladite installation (10) comprend un actionneur (38) pour déplacer ledit volet (35) et un capteur de température (8) pour mesurer la température dudit écoulement d'air mélangé (F1), ledit actionneur (38) étant raccordé audit capteur de température (8) pour réguler l'ouverture dudit au moins un premier orifice d'entrée (31) ou dudit au moins un second orifice d'entrée (32) en fonction de la température dudit écoulement d'air mélangé (F1).

8. Installation (10) selon l'une des revendications précédentes, dans laquelle ladite source d'air chaud (40) comprend des moyens de chauffage pour faire varier la température de ladite source (40).

9. Installation (10) selon la revendication 8, dans laquelle lesdits moyens de chauffage sont raccordés à un capteur de température (8) agencé au niveau dudit écoulement d'air mélangé (F1), de façon à faire varier la température de ladite source (40) en fonction de la température dudit écoulement d'air mélangé (F1).
